# EUROPEAN PATENT APPLICATION

(11) **EP 4 780 043 A1**
(43) Date of publication of application: **22.07.2026**
(21) Application number: 25152064.9
(22) Date of filing: 15.01.2025
(51) Int. Cl.: H04W 12/30, H04W 8/18, H04W 8/20

(54) **METHOD, CONFIGURATION PROGRAM, SERVER PROGRAM DATASET, DATA CARRIER, AS WELL AS USER DEVICE ADAPTED FOR UNUSED PROFILE DATASET DELETION ON A SERVER DEVICE, AND SAME**

(71) Applicant: Giesecke+Devrient Mobile Security Germany GmbH, 81677 München (DE)
(72) Inventor: Dandavate, Dinanath, 110 020 New Delhi (IN)
(74) Representative: LKGLOBAL Partnerschaftsgesellschaft mbB

(57) **Abstract**

A method, as well as a corresponding configuration program (10), a server program dataset (B), a computer-readable data carrier (11, 12, 13), a user device (5), and a server device (3) are provided, wherein for configuring a server device (3), in particular a security server providing a secure location for handling user profile datasets (P) adapted to be stored on a secure element (6), such as an eUICC, of a user device (5) associated to a user (U) and configured to identify the respective user (U) to allow participation in mobile telecommunication networks (N), the method comprises the steps of providing a database (D) containing an administered set (M) of user profile datasets (P); performing a database scan with the server device (3) to identify a subset (V) of unused profile dataset (Q) of the administered set (M) of user profiles dataset (P); and adding at least one of the unused profile datasets (Q) and/or a profile identifier (I) thereof to a deletion list (L) of unused profile datasets (Q) to be potentially deleted.

## Description

### Technical Field

The present disclosure relates to the field of configuring server devices and user devices, for example, smart cards, transaction cards, personal mobile devices or Internet-of-Things (IoT) devices, or alike, for managing a deletion of unused profile datasets configured to identify respective users for allowing their participation in communication networks. In particular, the present disclosure relates to a method of configuring a server device, in particular a security server providing a secure location for handling user profile datasets adapted to be stored on a secure element, such as an eUICC, of a user device associated to a user and configured to identify the respective user to allow participation in mobile telecommunication networks, a server program dataset for operating a server device, in particular a security server providing a secure location for handling user profile datasets, a computer-readable data carrier, a server device, in particular a security server providing a secure location for handling user profiles for communication via mobile telecommunication networks, a user device, in particular a mobile device or an IoT device to be configured for communication via mobile telecommunication networks by a user.

### Background of the Invention

User devices, such as personal mobile devices or IoT-devices, as well as smart cards (e.g., so-called java cards), identification cards, transaction cards, etc., are known from the prior art. The user devices are commonly configured to employ electronic subscriber profiles authenticating a user for secure transactions or communicating on telecommunication networks, e.g., mobile networks. Therefore, user devices are typically equipped with an electronic! embedded secure element (SE, eSE), also known as tamper resistant element (TRE), which may take the form of an UICC, eUICC, iUICC, SIM, eSIM, iSIM, or alike, configured to store one or more of the electronic subscriber profiles, in the form of respective user profile datasets, that may allow the user devices to connect to one or more mobile networks.

A subscriber profile (e.g., an eSIM profile) may be generated by a mobile network operator (MNO) on a server device, and may be stored, e.g., downloaded from there by a user device. The subscriber profile, or respective user profile dataset, may then be installed on a secure element of the user device and used for communication over a corresponding mobile network by the user device in that they allow for securely identifying the user. Certain ways for installing and deleting user profile datasets on servers or secure elements are known from the prior art.

EP 3 939 344 B1, for example, relates to a method for providing subscription profiles to a subscriber identity module, preferably an eUICC, by means of a subscription server, preferably an SM-DP, wherein: the subscription server has knowledge of a first subscription profile, which is installed in the subscriber identity module, has a first profile file structure and first profile data stored in the first profile file structure; and at least a portion of a second profile file structure of a second subscription profile is flagged in the subscription server and the second subscription profile is sent to the subscriber identity module, the flagged portion of the second subscription profile being sent without second profile data. The first profile in the eUICC may be deleted to ensure that no two profiles with the same subscriber identity data (IMSI, ICCID, OTA key, etc.) are stored in the eUICC.

EP 3 609 208 A1 refers to a Secure Element of a mobile device, comprising at least one subscription profile in a memory and an operating system running on a processor unit, the operating system supporting commands DELETE, UNDELETE and REMOVE executable on profiles stored in memory; the command DELETE executed on a profile effecting the profile to have a DELETED state, wherein a DELETED profile is unselectable or unusable, however remains stored in memory; the command UNDELETE executed on a DELETED profile effecting cancellation of the DELETED state of the profile; the command REMOVE executed on a profile effecting removal of the profile from memory.

WO 2018/165983 A1 relates to an eUICC profile deletion method and device. An eUICC profile deletion method, comprising: receiving an eUICC profile deletion request, the eUICC profile deletion request carrying authentication confirmation information; verifying the authentication confirmation information; in the case where the authentication confirmation information has passed the verification, sending, to the eUICC of a terminal, an instruction to delete the eUICC profile, the instruction to delete the eUICC profile being used for instructing the eUICC to delete the eUICC profile. The embodiments of the present invention can reduce the risk of financial losses associated with eUICC data or information leakage associated with eUICC data, after a terminal has been lost.

Methods for configuring user devices, as described above, may not fully satisfy all requirements regarding profile management. Operational profiles may be put in an "DISABLED" state after installation and gradually they may become "Unused" over the time. Such "Unused" profiles may never be touched again by an MNO, and may thus remain idle on a secure element, yet consuming its NVM/RAM. of user devices to switch between their attachment to different networks. It may happen that eUICC need additional NVM/RAM for enabling a profile. Sometimes test profiles are downloaded for test purposes and stay on eUICCs after testing.

### Summary of the Invention

It may be seen as an object to improve the interaction between the user devices and/or their secure elements when dealing with vast numbers of subscriber profiles managed by respective server devices. In particular, it may be seen as an object to provide a way to handle disabled and possibly unused profiles, such that on the one hand, convenient operation, versatility, and availability, as well as on the other hand, sufficient functional capacity, safety, and security of the involved servers and user devices can be provided in a satisfactory manner. These objects are at least partly achieved by the subject-matter of the independent claims.

According to an aspect, a method of configuring a server device, in particular a security server providing a secure location for handling user profile datasets adapted to be stored on a secure element, such as an eUICC, of a user device associated to a user and configured to identify the respective user to allow participation in mobile telecommunication networks, is provided, the method comprising the steps of providing a database containing an administered set of user profile datasets; performing a database scan with the server device to identify a subset of unused pro-file dataset of the administered set of user profiles dataset; and adding at least one of the unused profile datasets and/or a profile identifier thereof to a deletion list of unused profile datasets to be potentially deleted.

According to an aspect, a configuration program for a communication system involving user profile datasets adapted to be stored on a secure element, such as an eUICC, of a user device associated to a user and configured to identify the respective user to enable access mobile telecommunication networks, is provided, wherein the configuration program comprises instructions which, when the configuration program is executed by a server device, a user device, and/or a secure element, cause the server device, the user device, and/or the secure element to carry out a corresponding method.

According to an aspect, a server program dataset for operating a server device, in particular a security server providing a secure location for handling user profile datasets adapted to be stored on a secure element, such as an eUICC, of a user device associated to a user and configured to identify the respective user to allow participation in mobile telecommunication networks, is provided, wherein the server program dataset is configured to cause the server device to carry out a corresponding method and/or is configured with a corresponding configuration program.

According to an aspect, a computer-readable data carrier is provided, having stored thereon a corresponding configuration program and/or a corresponding server program dataset.

According to an aspect, a server device, in particular a security server providing a secure location for handling user profiles for communication via mobile telecommunication networks, is provided, wherein the server device is configured to carry out a corresponding method, comprises a corresponding configuration program, a corresponding server program dataset and/or a corresponding computer-readable data carrier.

According to an aspect, a user device, in particular a mobile device or an IoT device to be configured for communication via mobile telecommunication networks by a user, wherein the user device is configured to carry out a corresponding method, comprises a corresponding configuration program, a corresponding application program dataset and/or a corresponding computer-readable data carrier.

Each user profile dataset can be installed on a respective secure element and may include security credentials configured for accessing at least one mobile telecommunication network. Further user profile datasets can be provided for accessing the at least one further mobile telecommunication networks. User profile datasets can comprise respective diversified data configured for accessing the at least one mobile telecommunication network and the at least one further mobile communication network.

The server program dataset may at least in part be provided on the server device and can be configured to interact with the server device and/or at least one hardware security module (HSM) thereof. In other words, the server program dataset may at least partly run on the server device, for example, as a part of a server system dataset configured to operate the server device. Additionally, an administration program dataset can be provided for installing and/or managing the server program dataset, such as for installing and/or updating the server program dataset or respective update data subsets, including the database. Both, the administration program dataset and the server program dataset may be integrated as data subsets into a customer specific dataset, such as a software suite allowing for customization of data on the server device as described herein.

The application program dataset may at least in part be provided on the secure element and can be configured to interact with the user device and/or at least one network terminal thereof. In other words, the application program dataset may at least partly run on the secure element, for example, as a part of an operating system dataset configured to operate the secure element. Additionally, an installation program dataset can be provided for installing and/or managing the application program dataset, such as for installing and/or updating an operating system dataset or respective update data subsets, including the application program dataset. Both, the installation program dataset and the installation program dataset may be integrated as data subsets into a customization dataset, such as a firmware suite allowing for customization of data on the secure element as described herein.

The application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The proposed solution allows for generally improving the interaction between the user devices, their secure elements and/or server devices in managing user profiles. In particular, disabled and possibly unused profiles can be handled in set-ups involving large numbers of user profiles, such that on the one hand, convenient operation, versatility, and availability, as well as on the other hand, sufficient functional capacity, safety, and security of the involved servers and user devices can be provided in a satisfactory manner. The proposed solution thus has the advantage over the prior art, that it provides way to efficiently handle databases and/or secure elements containing respective user profile datasets in an efficient and well-organized manner.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment of a method, the method further comprises the step of implementing a time interval for performing the database scan. Thereby, unused profile datasets can be identified on a regular basis. This further helps in handling databases and/or secure elements containing respective user profile datasets in an efficient and well-organized manner.

According to an embodiment of a method, the at least one unused profile dataset and/or the profile identifier thereof is being added to the deletion list if a time value related to the at least one unused profile exceeds a predefined threshold value. Thereby, it can be assured or at least respective likelihood increased that unused profile datasets are abandoned and will not be reused again. This further helps in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the at least one of the unused profiles and/or the profile identifier thereof is being added to the deletion list if a pre-defined time span after an installation time point and/or last usage time point of the at least one of unused profile dataset has lapsed. Thereby, it can be further assured or at least respective likelihood increased that unused profile datasets are abandoned and will not be reused again. This additionally helps in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, at least one user profile and/or unused profile and/or a profile identifier thereof, are or is, respectively, marked with a deletion tag enabling deletion of the at least one user profile dataset and/or unused profile dataset. The deletion tag can include the respective profile dataset in the scanning process. For example, the deletion tag can be set after a corresponding time lapse, such as after an installation time point and/or last usage time point of the at least one of unused profile dataset has lapsed. Thereby, application and/or customer specific demands for managing unused and potentially deletable profile datasets can be implemented. This can further help in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, at least one user profile dataset and/or unused profile dataset and/or a profile identifier thereof, are or is, respectively, marked with a non-deletion tag disabling deletion of the at least one user profile dataset and/or unused profile dataset. The non-deletion tag can except the respective profile dataset from scanning. The non-deletion tag may lead to that a respective profile dataset contained in the database is exempted from scanning the first place. Thereby, computational resources of the server device can be saved for the process of managing the remaining user profile datasets in the course of identifying potentially unused profile datasets. Corresponding application and/or customer specific demands for managing unused and potentially deletable profile datasets can be implemented. This can additionally help in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the method further comprises the steps of triggering at least one user device and/or the secure element thereof to perform a memory scan for unused profile datasets. A respective status command or command message can be sent to the respective secure element. Thereby, the identification of any and is used profile datasets can be facilitated. This further helps in handling databases and/or secure elements containing respective user profile datasets in an efficient and well-organized manner.

According to an embodiment of a method, the method further comprises the step of receiving a message indicating at least one unused profile and/or a profile identifier thereof from the user device. Thereby, the identification of any and is used profile datasets can be further facilitated. This further helps in handling databases and/or secure elements containing respective user profile datasets in an efficient and well-organized manner.

According to an embodiment of a method, the method further comprises the step of scheduling a deletion time at which a certain number of the subset of unused profile datasets identified in the deletion list is scheduled for deletion. Respective deletion time can be scheduled for certain timeslots where the server device is expected to have the relatively low task load. This additionally helps in handling databases and/or secure elements containing respective user profile datasets in an efficient and well-organized manner.

According to an embodiment of a method, the method further comprises the step of defining a batch size of unused profile datasets to be kept and/or to be deleted. The respective batch size can be defined according to the timeframe and expected task load of the server device. This may further help in handling databases and/or secure elements containing respective user profile datasets in an efficient and well-organized manner.

According to an alternative or additional solution, a method of configuring a user device, in particular a mobile device or an IoT device, comprising a secure element, such as an eUICC, for identifying a user with at least one associated user profile dataset to allow participation in mobile telecommunication networks, is provided, the method comprising the steps of providing the at least one user profile dataset to the secure element; monitoring the at least one user profile dataset to determine if the at least one user profile dataset is an unused profile dataset; and sending a status notification to a server device, in particular a security server providing a secure location for handling user profile datasets, after determining that the at least one user profile dataset is an unused profile dataset, for allowing the server device to identify the at least one unused profile dataset as being potentially deletable.

According to an aspect, an application program dataset for operating a secure element of a user device, such as an eUICC, is provided, wherein the application program dataset is configured to cause the user device and/or the secure element to carry out a corresponding method and/or configured with a corresponding configuration program.

According to an embodiment of a method, the status notification contains at least one profile identifier of the at least one unused profile dataset. For example, an ISD-P-AID may be used on the side of the secure element and/or an ICCID may be used on the side of the server device as respective profile identifier. This further helps in handling databases and/or secure elements containing respective user profile datasets in an efficient and well-organized manner.

According to an embodiment of a method, the step of monitoring the at least one user profile dataset involves assessing an operational state of the at least one user profile dataset. The operational state may reflect a current usage or usage patterns of the at least one user profile dataset. This further helps in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the step of determining that the at least one user profile dataset is an unused profile dataset requires that the at least one user profile dataset is in a disabled state. User profile dataset may be in a disabled state if it is currently not used, i.e., implemented for identification, and/or specifically set to a dormant state. This additionally helps in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, it is being determined that the at least one user profile dataset is not an unused profile dataset if the at least one user profile dataset is in an enabled state. The user profile dataset may be (re-)activated to be brought into the enabled state. This can further help in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the method further comprises the steps of implementing a status count value to be incremented for the at least one unused user profile and sending the status notification to a server device if the status count value reaches a pre-defined threshold value. A respective count number can be implemented and/or first incremented upon disabling the at least one user profile. For example, when the user profiles and the disabled state, it may not be used to return respective status messages. The resulting inactivity is an indicator for that an unused user profile is at hand which may be potentially deleted. This additionally helps in handling databases and/or secure elements containing respective user profile datasets in an efficient and well-organized manner.

According to an embodiment of a method, the method further comprises the step of incrementing the status count value upon receiving a status command at the secure element regarding the status of the at least one user profile dataset and/or the at least one unused profile dataset, respectively. In other words, the secure element may be polled regarding the operational state of at least one user profile dataset by respective status command. For example, the status commands may be sent in pre-defined time intervals, such as every 5, 10, 15, 30, 60 and/or 120 minutes. The incremented status count value thus reflects a time value, such as a timespan, during which their respective user profile dataset is not in use and can thus be regarded as an unused dataset. This may further help in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the method further comprises the step of resetting the status count value when installing and/or enabling the at least one user profile dataset. For example, the status count value may be reset to a pre-defined initial value, such as 0. This provides a simple, yet reliable and efficient way to manage and monitor operational states of user profile datasets.

According to an embodiment of a method, the method further comprises the step of receiving a deletion command from the server device for requesting deletion of the at least one unused profile dataset in the secure element. For example, the server device may initiate deletion of the at least one unused user profile dataset by respective commands sent via ES2 and/or ES4 interfaces as defined by GSMA, that can be used for deleting profiles on an eUICC. A profile deletion can be carried out on both on the user device and the server device. A respective database on the server device may serve as a master and the secure storage locations and secure element as clients that are thereby kept in sync with each other. This may additionally help in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

According to an embodiment of a method, the method further comprises the step of sending a deletion response to the server device for confirming deletion of the at least one unused profile dataset. After receiving the deletion response, the server may regard the unused user profile as finally deletable and can therefore schedule its deletion. It can thereby be avoided that unused user profiles remain in the medication system, in particular started respective storage locations and secure elements as abandoned and/or forgotten. Assuring deletion of any unused user profile both on the server device, and the secure element thus helps in handling disabled and possibly unused profiles in set-ups involving large numbers of user profiles, such that on the one hand, convenient operation, versatility, and availability, as well as on the other hand, sufficient functional capacity, safety, and security of the involved servers and user devices can be provided in a satisfactory manner.

### Brief Description of the Drawings

- Fig. 1: is a schematic exemplary illustration of a communication system configured for carrying out a method according to the present invention.
- Fig. 2: is a schematic exemplary illustration of regular routines that may be implemented on a server device for performing steps that can be involved in scanning a database for unused user profiles when carrying out a corresponding method.
- Fig. 3: is a schematic exemplary illustration of possible steps which can be implemented on the server device for repeated scanning of a database for unused profiles and/or deletion of unused profiles when carrying out a corresponding method.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

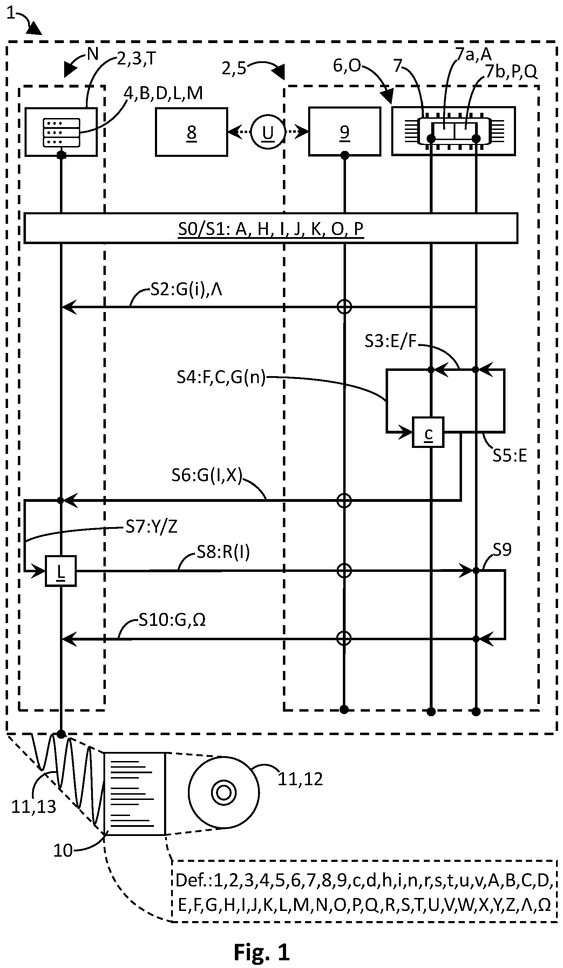

Fig. 1 shows an schematic illustration of an example of a communication system 1 comprising a computing device 2, for instance, in the form of a server device 3 controlled by a trusted entity T, which can include a hardware security module 4 adapted to store, manage and/or provide application program dataset A, operating system datasets O and/or user profile datasets P for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+).

The server device 3 and/or the hardware security module 4 may be operated by means of a respective server program dataset B which may involve routine server processes. A database D containing an administered set M of user profile datasets P can be administered by means of the server device 3 and/or the hardware security module 4. The administered set M of user profile datasets P can be any set of user profile datasets P that is being managed by the respective trusted entity T or at least a part of the entirety of managers a proper datasets P, for example, specific user proper datasets P intended for a certain application, customer, and/or mobile communication network N. At least a part of the user profile datasets P may be unused profile datasets P which may be potentially deleted and therefore entered in the respective deletion list L as it is described further down below.

In the present example, the user devices 5 may be adapted for secure operation, transactions and/or communication, e.g., via a mobile telecommunication networks N by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location 7 may provide different memory regions, such as at least one first memory region 7a and at least one second memory region 7b.

The at least one user profile dataset P is associated to a respective user U, can be configured according to respective diversified data, such as security credentials H, a profile identifier I, authentication certificates H, and/or security keys to allow access at least one mobile telecommunication network N and/or a data object. The at least one user profile P, diversified data, and/or data object can have a predefined data format as required for participating in the mobile telecommunication networks N, and can be stored in respective memory regions 7a, 7b of the secure storage location 7. By accessing the telecommunication networks M, N, the user may be provided with respective network services and access to data objects. For example, a mobile telecommunication network N may be a public network (PN). Further mobile telecommunication networks N may be a non-public network (NPN), such as a private network of a certain government, non-government institution, e.g., schools, colleges, government agencies, departments, and universities, or alike, and since our private companies, service providers, etc.

A management application 8 may be provided which can be configured to allow the user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the eIM. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6.

Furthermore, the operating system dataset O may comprise and/or may be configured to interact with an application program dataset A, the at least one user profile P and/or security credentials H, including profile identifiers I, authentication certificates J and/or security keys K. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the application program dataset A, the server program dataset B, the security credentials H, the diversified data, the at least one profile dataset P, Q, the operating system dataset O, the profile identifiers I, and/or the authentication certificates J, the security keys K, and/or any component thereof. The authentication certificates J may be any kind of electronic certificate, for example, that can be issued by the trusted entity T, for authenticating an origin of the user devices 5, the secure elements 6, the secure storage location 7, the application program dataset A, the server program dataset B, the security credentials H, the diversified data, the security keys K, the operating system dataset O, the at least one user profile P, Q, the profile identifiers I, and/or any component thereof.

In any of the embodiments of the communication system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the configuration program 10. Parameters associated with and/or underlying the security system 1, any of the components thereof and/or any steps S carried out thereby, can be defined in and/or by the configuration program 10.

For carrying out the steps S, the configuration program 10 may provide and/or define respective command messages, such as status commands C which can be configured to interact with the user devices 5, the secure elements 6, the secure storage location 7, the application program dataset A, the security credentials H, the diversified data L, the operating system dataset O, the at least one profile dataset P, Q, the profile identifiers I, the mobile telecommunication networks N and/or any component thereof. Transmission lines (not shown) may be provided for handling and/or transferring any of the above data components and/or data objects D, for example, via mobile telecommunication networks N as parts thereof or elements connected thereto. Therefore, the mobile telecommunication networks N may comprise any kind of wired and/or wireless transmission and/or broadcasting chains or lines, including the Internet (for transmissions "Over-The-Air") as well as other physical and/or non-physical data carriers, which can be configured and secured as desired and required by the communication system 1 and its components for carrying out any of the steps S as described herein.

In a first step S1, the server device 3 may provide any of the data components of the configuration system 1, including the operating system dataset O, possibly along with the application program dataset A, respective diversified data L and/or at least one user profile P associated with the user U, to the secure element 6 of the user device 5, for example through the communication interface 9 to be stored in the secure storage location 7 for deployment to the user U. The at least one user profile P may be created based upon respective diversified data kept in the database D for the respective user U. In particular, certain security credentials H may have a high or even the highest security level conceivable for the secure element 6. Any of these components may be provided as enable access to data objects, such as electronic load files (ELF), data blobs, or alike.

In the present example, the data provision and step 1 can be associated with a pre-issuance condition of the user device 5 and/or the secure element 6. Any of the steps taking place after the activation process in step 2 can be associated with a post-issuance condition of the user device 5 and/or the secure element 6. Providing an installation program dataset to the user device 5 and/or the secure element 6 can therefore be regarded as a zeroth step S0 which may take place in a factory and/or manufacturing facility before the first step S1 of providing data to the user device 5 and/or the secure element 6. For example, the application program dataset A may be installed in the first memory region 7a, and the user profile dataset P may be installed and the second memory region 7b.

In a second step S2, the secure element 6 may confirm download and/or installation of the profile data set P to the server device 3, for example, via a respective installation response A and/or status notification G through the communication interface 9. The respective installation time point i or a corresponding timestamp may be provided to the server device 3. In a third step S3, the application program dataset A may be provided with information regarding the installation and/or an operational state of the user profile dataset P, such as, whether the user profile dataset P is in an enabled state E or in a disabled state F.

In a fourth step S4, the application program dataset A may implement a status counter with a respective status counter value c if it has been informed that the at least one user profile dataset P has been set to the disabled state F. The status counter value c may start with an initial value of 0 which can be incremented by a respective count number n, for example, each time when the secure element 6 is polled by a respective status command C or command message demanding a status response G regarding the profile state, and that status response G confirms that the user profile dataset P remains in the disabled state F, and can thus be regarded as being an unused profile dataset Q. In a fifth step S5, the status count may be aborted if the unused profile dataset Q is being put back in the enabled state E and can thus be regarded as a user profile dataset P in use, which may lead to returning to the third step S3.

In a sixth step S6, the application program dataset A can inform the server device 3 of that the status count value c reached or exceeded a respective threshold value X, for example, by means of respective status message G containing the respective profile identifier I, indicating that the unused user profile dataset Q remains unused. In a seventh step S7, the server device 3 may check, whether the respective unused profile dataset Q may be deleted or a respective permission for deletion is at hand, for example, by determining, whether the unused profile dataset Q is provided with a deletion tag Y, marking the profile as discardable, or with a non-deletion tag Z, marking the unused profile dataset Q as non-discardable. If a deletion permission is at hand, the server device 3 may add the unused user profile dataset Q to the deletion L, whereas when no permission for deleting the unused profile dataset Q is at hand, the server device 3 may ignore the status message G indicating that the unused profile dataset Q is unused, whereby the useful for dataset Q remains dormant.

In an eighth step S8, the server device 3 may send a deletion command R to the secure element 6 requesting deletion of the respective unused user profile Q, for example, by identifying it by means of the respective profile identifier I. In a ninth step S9, the secure element 6 may delete the respective unused user profile Q. In a tenth step, the secure element 6 may confirm deletion of the respective unused user profile Q by sending a respective status notification, for example, in the form of a deletion response Q back to the server device 3.

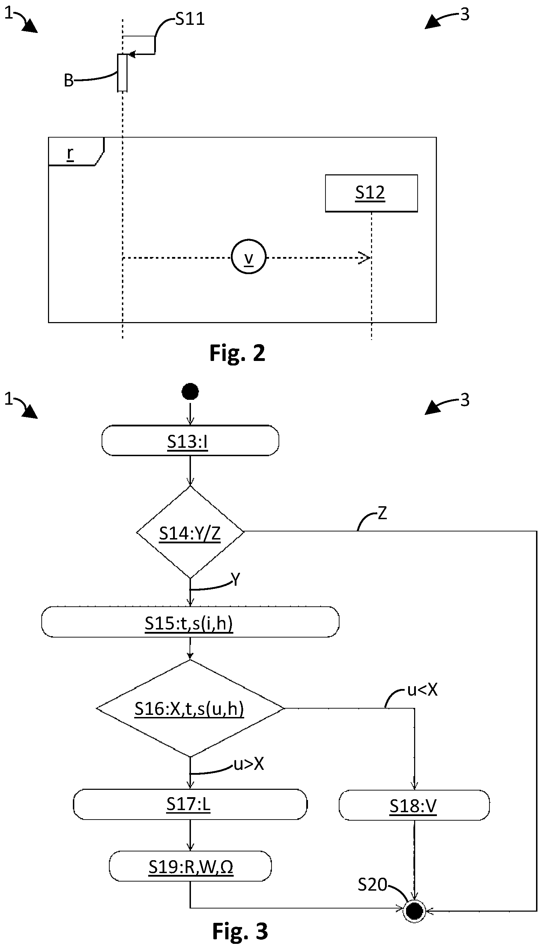

Fig. 2 shows a schematic exemplary illustration of regular routines that may be implemented on the server device 3 for performing steps S that can be involved in scanning the database D for unused user profiles Q when carrying out a corresponding method. In an eleventh step S11, the server device 3 may read a respective configuration for dealing with unused user profiles Q which can be implemented in the server program dataset B. For example, based on respective instructions contained in the server program dataset B, the server device 3 may carry out an instruction loop r respective repetition of instructions implemented based on a respective time interval v, which can be set to a day, i.e. 24 hours, or alike. In a twelfth step S12, the server device 3 may conduct a search for unused profile data sets Q, for example, at least once during each time interval v in the manner of a so-called CronJob.

Fig. 3 shows a schematic exemplary illustration of possible steps S which can be implemented on the server device 3 for repeated scanning of the database D for unused profile datasets Q and/or deletion of unused profile datasets Q when carrying out a corresponding method, for example, in a respective instruction loop r as described above under reference to Fig. 2. In a thirteenth step S13, the server device 3 may get the profile identifiers I such as, e.g., an EID, of unused profile datasets Q contained in the administered set M. In the fourteenth step S14, analogously to step S7, the server device 3 may check car whether a deletion permission is at hand, for example, by reading respective deletion tags Y and/or non-deletion tags Z.

In a fifteenth step S15, the server device 3 can calculate a time value, such as the time span s that may have elapsed between the installation time point i and the current time h, for example, the respective date and point of time for respective unused user profiles Q if they are marked with a deletion tag Y. In a sixteenth step S16, the server device 3 can calculate another time value t, such as a time span s that may have elapsed between last usage time point u of the respective unused profile datasets Q and the current time h, and/or check threshold value X for that time span s based on the last usage time point u of the respective unused user profiles Q marked with a deletion tag Y. In a seventeenth step S17, for example, if the respective time span s between the last usage time point u and the current time h exceeds the respective threshold value X, respective unused user profiles Q can be added to the deletion list L.

In an eighteenth step S18, for example, if the respective time span s between the last usage time point u and the current time h does not exceed the respective threshold value X, the respective unused user profiles Q identified can be added to a subset V of unused datasets Q of the administered set M. The subset V of unused datasets Q can be marked "true" for scanning/processing in the next time interval v of the instruction loop r. In a nineteenth step S19, any batch of unused user profiles Q contained in the deletion list L and meeting respective requirements for deletion can be added to a discardable subset W of unused profile datasets Q which can be deleted, which may involve sending out deletion requests R to secure elements 6 as described above under reference to Fig.1.

For example, deletion of unused profile datasets Q can be carried out in and/or after step S19 batch wise after receiving respective deletion responses Q. The respective instruction loop r may end in a step S20. For example, in the step S20 the deletion of unused user profiles contained in the subset W of discardable profiles can be performed, in particular, if respective deletion responses Q are at hand. Alternatively, or additionally, if it is decided in step S14 that unused profile datasets Q with non-deletion tags Z are at hand, these profiles may be simply ignored as described above under reference to Fig. 1 with respect to step S7. In a similar manner, the unused profile datasets Q added to the unused subset V although, they accepted from deletion and the current instruction loop r, they can be ignored in the deletion process of step S20, but remain marked to be scanned during the next instruction loop r.

According to the present exemplary embodiments, the application program dataset A may be provided in the form of a pre-installed for M2M communications, that can have a respective configuration for implementing the status count value c and/or time span s, or alike, by which upon reaching a respective threshold value X, the secure element 6 can notify the server device 3 that the respective profile dataset and/or its profile identifier I, such as an AID, may be deleted. Whenever a new profile dataset is being installed/downloaded in the disabled state F, the application program dataset A can start counting status commands, time increments, or alike. If a profile dataset gets "Enabled", a respective counter can be reset to 0 and can be restarted. Again disabling may re-start a respective counter, for example after checking a POL1 enforcement by the secure element 6, such as an eUICC.

Furthermore, upon reaching a preconfigured threshold value X with the counter, the secure element 6 can notify the server device 3, for example, by SMS and/or HTTP communication to delete such AID/Profile by using a currently "Enabled" profile dataset for communications via the respective mobile telecommunication network N. After receiving a respective notification from the server device, a decision upon whether to delete the respective profile dataset, or not, may be made. The server device 3 can be configured to carry out a respective action by taking steps towards deleting the respective profile dataset, or to ignore it.

As a default configuration, notifications regarding our newest profile datasets could be ignored or further processed towards deletion depending on respective preferences of the parties involved, such as of MNOs providing the mobile communication networks N, providers of the user devices 5, secure elements 6, and/or the users U. If the server decides to delete a respective profile dataset /AID it can prepare a command to delete such AID/Profile. If the server device 3 decides that no action needs to be taken regarding the respective proper dataset, related notifications can be simply ignored, for example, by the SM-SR.

For example, a status notification G to be send by the secure element 6 can have the following structure, e.g., provided in the form of an eUICC notification tag:
- Length
   ∘ EID tag/length/EID Value
   ∘ Notification type - Profile to be deleted (06 since RFU)
   ∘ List of ISD-P-AID (If more than 1 profiles to be deleted on that EID)

The present exemplary embodiments allow the server device 3 to know which operational profile datasets are installed on secure elements 6 and are in a disabled state F. The server device 3 can also know the respective installation time points i. The server device can be configured to perform deletion of unused profile datasets Q after expiration of a respective time span s, such as several days. Such a configuration can be specified or generic for any administered set M of profiles, such as based on the preferences of respective MNOs providing the mobile communication networks N, providers of the user devices 5, secure elements 6, and/or the users U.

For example, the server device 3 may keep scanning/checking for outdated "Unused" operational profiles in the communication system 1 as per configured scheduled time and/or time interval v. The server device can verify a respective installation time point i of each operational profile dataset. The scheduled time interval v could have a length of days based on respective desired and/are required performance. Based on respective capabilities of the server device 3, CronJobs for managing all "Unused" operational profiles on all administered secure elements 6 can be scheduled. It is conceivable that a particular entity involved in the communication system 1, such as a particular customer, has millions of user profile datasets, which may make it necessary to prepare a batch of such unjust profile datasets Q to the deleted at a specifically scheduled time every day.

According to the present exemplary embodiments, respective configurations can be integrated by the application program dataset A and/or the server program dataset B based on the following examples for values and thresholds involved:
- How many days after installation profiles go into "Unused" state?
   ∘ e.g. after/over 45 days of installation days profile can be considered as "Unused"
   ∘ markedUnusedProfileDayAfter: 45
- How frequently should such "Unused" be identified in the system?
   ∘ e.g. Every day at midnight system should check "Unused" profile
   ∘ schedulerUnusedJob: 0 0 * * * (# Schedule everyday at 12:00 AM)
- When should deletion of "Unused" profiles as a batch be scheduled?
   ∘ e.g. Schdule a batch size of 1000 "Unused" profile for deletion
   ∘ ScheduleBatchDeletion: 012 * * * (# Schedule everyday at 12:00 PM)
- Batch size to delete "Unused" profiles
   ∘ e.g. depending on the respective overall numbers of profiles in the administered set M
   ∘ Batchsize: 1000

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: communication system
- 2: computing device
- 3: server device
- 4: hardware security module
- 5: user device
- 6: secure element
- 7: secure storage location
- 7a: first memory region
- 7b: second memory region
- 8: remote management application
- 9: communication interface / modem
- 10: configuration program
- 11: computer-readable data carrier
- 12: computer-readable medium
- 13: data carrier signal

- c: status count value
- d: deletion time
- h: current time
- i: installation time point /time stamp
- n: count number
- r: instruction loop/repetition
- s: time span
- t: time value
- u: last usage time point
- v: time interval

- A: application program dataset
- B: server program dataset / routine server process

- C: status command / command message
- D: data base
- E: enabled state
- F: disabled state
- G: status notification / response message / status response
- H: security credentials
- I: profile identifier
- J: authentication certificate
- K: security key
- L: deletion list
- M: administered set
- N: mobile telecommunication network
- O: operating system dataset
- P: user profile
- Q: unused profile
- R: deletion command / request
- S: step
- T: trusted entity
- U: user
- V: subset of unused profiles
- W: subset of discardable profiles
- X: threshold value
- Y: deletion tag / discardable
- Z: non-deletion tag / dormant / non-discardable

- A: installation response
- Q: deletion response
- S0: initialisation
- S1: provide data
- S2: confirm download/installation
- S3: enable profile
- S4: start status count
- S5: abort status count
- S6: inform unused status
- S7: check deletion permission
- S8: deletion request
- S9: profile deletion
- S10: deletion response
- S11: read configuration
- S12: search unused profiles
- S13: profile identifiers
- S14: check deletion permission
- S15: calculate installation time span
- S16: calculate unused time span
- S17: add to deletion list
- S18: add to unused subset
- S19: adds to discardable subset
- S20: end routine/ delete profiles

## Claims

1. Method of configuring a server device (3), in particular a security server providing a secure location for handling user profile datasets (P) adapted to be stored on a secure element (6), such as an eUICC, of a user device (5) associated to a user (U) and configured to identify the respective user (U) to allow participation in mobile telecommunication networks (N), the method comprising the steps of
providing a database (D) containing an administered set (M) of user profile datasets (P);
performing a database scan with the server device (3) to identify a subset (V) of unused profile dataset (Q) of the administered set (M) of user profiles dataset (P); and
adding at least one of the unused profile datasets (Q) and/or a profile identifier (I) thereof to a deletion list (L) of unused profile datasets (Q) to be potentially deleted.

2. Method according to claim 1, further comprising the step of implementing a time interval (v) for performing the database scan.

3. Method according to claim 1 or 2, wherein the at least one unused profile dataset (Q) and/or the profile identifier (I) thereof is being added to the deletion list (L) if a time value (t) related to the at least one unused profile (Q) exceeds a predefined threshold value (X).

4. Method according to at least one of claims 1 to 3, wherein the at least one of the unused profiles (Q) and/or the profile identifier (I) thereof is being added to the deletion list (L) if a pre-defined time span (s) after an installation time point (i) and/or last usage time point (u) of the at least one of unused profile dataset (Q) has lapsed.

5. Method according to at least one of claims 1 to 4, wherein at least one user profile (P) and/or unused profile (Q) and/or a profile identifier (I) thereof, are or is, respectively, marked with a deletion tag (Y) enabling deletion of the at least one user profile dataset (P) and/or unused profile dataset (Q).

6. Method according to at least one of claims 1 to 5, wherein at least one user profile dataset (P) and/or unused profile dataset (Q) and/or a profile identifier (I) thereof, are or is, respectively, marked with a non-deletion tag (Z) disabling deletion of the at least one user profile dataset (P) and/or unused profile dataset (Q).

7. The method according to at least one of claims 1 to 6, further comprising the step of triggering at least one user device (5) and/or the secure element (6) thereof to perform a memory scan for unused profile datasets (Q).

8. Method according at least one of claims 1 to 7, further comprising the step of receiving a message indicating at least one unused profile (Q) and/or a profile identifier (I) thereof from the user device (5)

9. Method according at least one of claims 1 to 8, further comprising the step of scheduling a deletion time (d) at which a certain number of the subset (V) of unused profile datasets (Q) identified in the deletion list (L) is scheduled for deletion.

10. Method according to at least one of claims 1 to 9, further comprising the step of defining a batch size of unused profile datasets (Q) to be kept and/or to be deleted.

11. Configuration program (10) for a communication system (1) involving user profile datasets (P) adapted to be stored on a secure element (6), such as an eUICC, of a user device (5) associated to a user (U) and configured to identify the respective user (U) to enable access mobile telecommunication networks (N), wherein the configuration program (10) comprises instructions which, when the configuration program (10) is executed by a server device (3), a user device (5), and/or a secure element (6), cause the server device (3), the user device (5), and/or the secure element (6) to carry out a method of at least one of claims 1 to 10.

12. Server program dataset (B) for operating a server device (3), in particular a security server providing a secure location for handling user profile datasets (P) adapted to be stored on a secure element (6), such as an eUICC, of a user device (5) associated to a user (U) and configured to identify the respective user (U) to allow participation in mobile telecommunication networks (N), wherein the server program dataset (A) is configured to cause the server device (3) to carry out a method according to at least one of claims 1 to 10 and/or is configured with a configuration program (10) according to claim 11.

13. Computer-readable data carrier (11, 12, 13) having stored thereon a configuration program (10) according to claim 11 and/or a server program dataset (A) according to claim 12.

14. Server device (3), in particular a security server providing a secure location for handling user profiles (P) for communication via mobile telecommunication networks (N), wherein the server device (4) is configured to carry out a method according to at least one of claims 1 to 10, comprises a configuration program (10) according to claim 11, a corresponding server program dataset (B) according to claim 12 and/or a computer-readable data carrier (11, 12, 13) according to claim 13.

15. User device (5), in particular a mobile device or an IoT device to be configured for communication via mobile telecommunication networks (N) by a user (U), wherein the user device (5) is configured to carry out a method according to at least one of claims 1 to 10, comprises a configuration program (10) according to claim 11, a corresponding application program dataset (A) and/or a computer-readable data carrier (11, 12, 13) according to claim 13.
